# EUROPÄISCHE PATENTSCHRIFT

(11) **EP 3 580 110 B1**
(45) Veröffentlichungstag und Bekanntmachung des Hinweises auf die Patenterteilung: **31.03.2021**
(21) Anmeldenummer: 18704514.1
(22) Anmeldetag: 07.02.2018
(51) Int. Cl.: B61F 1/14, B61D 17/00, B61F 1/12, F16B 5/06, F16B 5/02

(54) **QUERTRÄGER ZUR DREHZAPFENAUFNAHME MIT LASTVERTEILUNGSELEMENT**
CROSS MEMBER FOR RECEIVING PIVOT PINS HAVING A LOAD DISTRIBUTION ELEMENT
TRAVERSE POUR LA RÉCEPTION DE PIVOT AVEC ÉLÉMENT DE RÉPARTITION DE CHARGE

(30) Priorität: 09.02.2017 DE 102017102561
(43) Veröffentlichungstag der Anmeldung: 18.12.2019
(73) Patentinhaber: CRRC Qingdao Sifang Co., Ltd., Qingdao, Shandong 26611 (CN); CG Rail - Chinesisch-Deutsches Forschungs - Und Entwicklungszentrum Für Bahn - Und Verkehrstechnik Dresden GmbH, 01067 Dresden (DE)
(72) Erfinder: LIANG, Jianying, Qingdao Shandong 266111 (CN); ZHONG, Chongcheng, Qingdao Shandong 266111 (CN); HE, Jiajie, Qingdao Shandong 266111 (CN); LIANG, Junhai, Qingdao Shandong 266111 (CN); DU, Jian, Qingdao Shandong 266111 (CN); RUAN, Dawei, Qingdao Shandong 266111 (CN); HUFENBACH, Werner, 01324 Dresden (DE); ULBRICHT, Andreas, 01324 Dresden (DE)
(74) Vertreter: Prinz & Partner mbB
(86) Internationale Anmeldenummer: PCT/EP2018/053048
(87) Internationale Veröffentlichungsnummer: WO 2018/146132

(56) Entgegenhaltungen:
- EP-A1- 0 836 976
- CH-A1- 700 850
- US-A- 5 855 174

## Beschreibung

Die Erfindung betrifft eine Anordnung zur Anbindung eines Querträgers zur Drehzapfenaufnahme an zwei unteren Längsträgern eines Wagenkastens für ein Schienenfahrzeug. Das Schienenfahrzeug soll insbesondere für den Einsatz im Kurzstreckenbetrieb, wie bei U- und S-Bahnen, bei denen die Schienenfahrzeuge oder die aus ihnen gebildeten Zugeinheiten in kurzen Intervallen beschleunigt und abgebremst werden müssen, geeignet sein.

Bekannte Wagenkästen von Schienenfahrzeugen bestehen in konventioneller Bauweise aus einer röhrenförmigen Konstruktion mit zwei Stirnwänden, die im Regelfall als Übergang zu einem benachbarten Wagenkasten ausgebildet sind. Alternativ kann die Stirnwand auch als Führerhaus ausgebildet sein.

In konventioneller Bauweise besteht der Wagenkasten aus einem Untergestell (auch Unterboden genannt), zwei Seitenwänden sowie einem Dach. Dabei weisen die Baugruppen, insbesondere die Seitenwände und das Dach, eine tragende, skelettartige Tragstruktur auf, bei der Stahlleichtbauprofile miteinander oder mit einem Dünnblech, das die äußere Verkleidung bildet, mit bekannten Schweißverfahren verbunden sind. Unterhalb des Untergestells sind auch bei diesen Konstruktionen Querträger angeordnet, die die Drehzapfen aufnehmen, die im Drehgestell wiedergelagert sind. Typischerweise sind einem Wagenkasten zwei Querträger in der Nähe der Enden zugeordnet.

Für die Tragstruktur und die Verkleidung werden neben Stahl- und Stahlleichtbauprofilen und Dünnblechen zunehmend leichte und korrosionsresistente Werkstoffe aus Aluminium oder Aluminiumlegierungen verwendet.

Neben der klassischen Skelettbauweise, insbesondere für die Baugruppen Dach und Seitenwand, gibt es seit Jahren Bemühungen, alternative Konstruktionsprinzipien in die Praxis überzuleiten.

Aus der GB 2 030 934 A ist eine Karosserie für ein Fahrzeug und ein mit dieser Karosserie ausgestattetes Fahrzeug bekannt.

Dabei besteht die Karosserie aus modularen Teilsegmenten, die aneinandergrenzend so miteinander verbunden sind, dass die Segmentmodule zugleich einen Teilbereich des Karosseriedaches bilden. Dazu weisen die Teilsegmente eine abgewinkelte Verlängerung auf.

Um der Karosserie die notwendige Festigkeit zu verleihen, werden die einzelnen Module jeweils in überlagerter Form montiert. Durch die Verwendung klassischer Konstruktionswerkstoffe, wie Stahl, kommt es in dem Überlapp- bzw. Stoßbereich der aneinandergrenzenden Teilsegmente bzw. Segmentmodule zu starken Korrosionserscheinungen. Auch erfordert die Vorfertigung der dreidimensional geformten Teilsegmente und der sie verbindenden Profile eine hohe Fertigungsgenauigkeit.

Beim Verschweißen der Teilsegmente untereinander, beziehungsweise mit den sie verbindenden Profilen, werden vergleichsweise große Wärmemengen in die Konstruktionsteile eingebracht, was zu stärkerem Verzug und daraus resultierenden Fertigungsungenauigkeiten führt. Ebenso wird durch die vergleichsweise große Wärmeeinflusszone das Gefüge geschwächt. Durch den ungewollten Wärmeeintrag kommt es zudem regelmäßig zum Ausbeulen oder Verformen der dünnwandigen, die Wagenkastenaußenhaut bildenden Segmentmodule. Diese Bereiche mit den signifikanten Verformungen müssen durch weiteren Wärmeeintrag und den Eintrag mechanischer Energie (Normalglühen, Spannungsarmglühen, Richten) aufwendig nachgearbeitet werden. Zudem ist es im Regelfall erforderlich, die sichtbaren Außenflächen aufwendig zu spachteln und zu verschleifen, um einen ansprechenden Gesamteindruck des Wagenkastens zu realisieren.

Falls die Segmentmodule untereinander beziehungsweise mit den angrenzenden Profilen durch Schraub- oder Nietverbindungen verbunden werden, so wird dadurch die Gefahr der Spaltkorrosion in der Verbindungszone stark gefördert. Da zudem die verwendeten Verbindungssegmente und die Segmentmodule aus unterschiedlichen Stählen bzw. Stahllegierungen bestehen, kann es zu frühzeitiger Kontaktkorrosionsbildung kommen.

Die EP 0926036 A1 beschreibt einen Wagenkasten für Hochgeschwindigkeitszüge in Differentialbauweise, der aus einer Bodenplatte, einem Dach, Stirnwänden und Seitenwänden gebildet wird, wobei eine Seitenwand aus entlang der Wagenkastenlängsachse angeordneten Sektionen gebildet werden kann, die jeweils aus einem einteiligen Hohlkammerprofil aus faserverstärktem Kunststoff bestehen, wobei das Hohlkammerprofil vorrangig so gestaltet ist, dass die Steifigkeit des Wagenkastens erhöht wird. Bodenplatte, Stirnwände und Längsträger werden aus Aluminium-Strangpressprofilen gebildet, wodurch nachteilig wiederum die Korrosionsanfälligkeit erhöht wird.

Um die Gesamtmasse des Wagenkastens zu reduzieren, weist der modular aufgebaute, funktionsintegrierte Wagenkasten einen hohen Anteil an Faserkunststoffverbundwerkstoffen (FKV-Werkstoffen) und Hybridwerkstoffen auf.

Wegen der im Bereich des Wagenkastens anzunehmenden mehrachsigen Belastungssituation werden speziell die Kopplungsmodule als Metall- oder FKV-Hybridstruktur gefertigt.

In der DE 11 2013 002 072 T5 ist eine Schienenfahrzeugaufbaustrukturbeschrieben, die unter anderem eine Unterbodenstruktur mit einer Mehrzahl von Längsträgern vorsieht. Dabei sind jedoch nur die beiden äußeren Längsträger durchgehend ausgeführt. Mittlere Längsträger, die sich zwischen den beiden Längsträgern erstrecken, reichen nur von den jeweiligen Enden des Wagenteils bis hinter die Querträger, als über ca. ein Viertel der gesamten Wagenlänge. Die mittleren Längsträger dienen insbesondere der Kraftübertragung zu den Querträgern. Bei diesen Kräften handelt es sich um die Zug- bzw. Druckkräfte, des Normalbetriebs. Dazu sind an den Enden der Wagenteile Kupplungsaufnahmen vorgesehen, die Kräfte direkt an die mittleren Längsträger übertragen. Die Querträger sind an den äußeren und an den mittleren Längsträgern verschraubt. Um die Kraftübertragung besser zu verteilen, weisen die Querträger in den Verschraubungsbereichen eine erhöhte Ausdehnung entlang der Längsträger auf.

Weitere Ausführungen von Untergestellen für Schienenfahrzeuge sind aus der DE 10 2012 214 162 A1 bekannt, aus der auch metallische Verbindungselemente als Lastverteilungselemente zur Anbindung unterer Längsträger an einen Wagenkasten hervorgehen.

Die EP 0 836 976 A1 offenbart eine weitere Ausführung aus dem Stand der Technik.

Ein Ziel der gegenwärtigen Entwicklung für Schienenfahrzeuge zur Personenbeförderung, insbesondere für den Einsatz im Kurzstreckenbetrieb, wie U- und S-Bahnen, ist es, diese so weiterzubilden, dass die Nutzlast der Schienenfahrzeuge bei gleichbleibender Gesamtmasse gegenüber den bekannten Lösungen aus dem Stand der Technik erhöht wird, d.h. dass die Strukturmasse des Wagenkastens reduziert wird.

Dazu kommen in immer stärkerem Maße Faserverbundwerkstoffe, auch im Bereich der großen Kräften ausgesetzten Bauteile, zum Einsatz.

Es stellt sich die Aufgabe, eine geeignete Konstruktion für die Kraftübertragung von einem Querträger in Faserverbundstrukturen, insbesondere in die Längsträger eines Wagenkastens, die aus Faserverbundmaterial bestehen, vorzuschlagen.

Erfindungsgemäß wird die Aufgabe durch einen Querträger mit Lastverteilungsanordnung gemäß dem unabhängigen Anspruch 1 gelöst. Vorteilhafte Ausgestaltungen der Erfindung sind in den rückbezogenen Ansprüchen angegeben.

Der Wagenkasten ist zumindest teilweise aus faserverstärkten Kunststoffverbund-Werkstoffen, besonders bevorzugt Kohlenstofffaserverbund-Werkstoffen, ausgebildet, um die Strukturmasse gegenüber einem Wagenkasten nach dem Stand der Technik weiter zu reduzieren. Bevorzugt beträgt der Masseanteil faserverstärkter Kunststoffe im Wagenkasten bis zu 85 %, besonders bevorzugt mehr als 66 %. Bevorzugt umfasst der faserverstärkte Kunststoff wahlweise thermoplastische oder duroplastische Kunststoffe, besonders bevorzugt Epoxidharze, ungesättigte Polyesterharze, PU-Harze, Vinylesterharze oder Phenolharze, als Matrixwerkstoff.

Vorteilhaft ergibt sich durch die zumindest teilweise Fertigung des Wagenkastens aus faserverstärkten Kunststoffen eine günstige Reduzierung der Strukturmasse des Wagenkastens, wodurch die Nutzlast im Fahrbetrieb erhöht werden kann. Vorteilhaft ergibt sich weiterhin sowohl ein deutlich reduzierter Wartungsaufwand als auch eine deutlich verringerte Korrosionsanfälligkeit durch die Verwendung von FKV-Werkstoffen. Vorteilhaft ermöglicht die segmentweise Fertigung jeweils gleichartiger Boden-, Dach- und Seitenwandsegmente den Einsatz gängiger Fertigungsverfahren und -werkzeuge für faserverstärkte Kunststoffe und damit verbunden die flexible Anpassung z. B. der Länge eines erfindungsgemäßen Wagenkastens. Weiterhin ist der Wagenkasten druckdicht ausgestaltet.

Der Wagenkasten umfasst zumindest die Baugruppen Seitenwand, Dach, Boden, Stirnwand und jeweils zwei in Längsrichtung über die gesamte Länge des Wagenkastens durchgehend verlaufende untere und obere Längsträger sowie optional ein Kopfmodul.

Besonders bevorzugt sind die Seitenwand-, Dach- und Bodensegmente der einzelnen Baugruppen platten-, schalen- oder halbschalenförmig ausgestaltet. Die platten-, schalen- oder halbschalenförmigen Dach- bzw. Bodensegmente sind kraft- und / oder form- und / oder stoffschlüssig mit den oberen bzw. den unteren Längsträgern verbunden. Die platten-, schalen- oder halbschalenförmigen Seitenwandsegmente sind kraft- und / oder form- und / oder stoffschlüssig mit den vertikal angeordneten Türsäulen sowie den oberen und unteren Längsträgern verbunden. Die Stirnwand ist platten-, schalen- oder halbschalenförmig ausgeführt.

Der Boden des Wagenkastens bildet die Schnittstelle zwischen den Passagieren und dem Wagenkasten. Bevorzugt ist dieser aus einzelnen Bodensegmenten und mindestens einer Endtraverse aufgebaut. Bevorzugt sind die Bodensegmente plattenförmig ausgebildet, und überbrücken den Abstand zwischen den beiden unteren Längsträgern.

Bevorzugt bilden die Endtraversen der Baugruppe Boden den Abschluss des Wagenkastens auf beiden Seiten, verbinden die Seitenwände über die unteren Längsträger miteinander und dienen unter anderem zur Halterung des Längsabschnittes des Querträgers, der die Durchführung der Kupplungskräfte leistet, die in die unteren Längsträger des Wagenkastens eingeleitet werden

Bevorzugt ist die Endtraverse aus mindestens einem FKV-Werkstoff ausgebildet, deren Fasern vorzugsweise mehrachsig, besonders bevorzugt bidirektional, ausgerichtet sind.

Der Wagenkasten weist zwei obere und zwei untere Längsträger auf, wobei die oberen und unteren Längsträger jeweils über die gesamte Länge des Wagenkastens angeordnet sind. Bevorzugt schließen die oberen und unteren Längsträger jeweils mit der Seitenwand ab.

Bevorzugt sind die oberen und unteren Längsträger als Mehrkammerhohlprofile aus einem FKV-Werkstoff, vorzugsweise einem kohlefaserverstärktem Kunststoffmaterial, ausgebildet und tragen so zur weiteren Reduktion der Gesamtmasse gegenüber gängigen Stahl- oder Aluminiumprofilen bei.

Weiterhin dienen die Mehrkammerhohlprofile der oberen und unteren Längsträger vorteilhaft der Aufnahme der in den Wagenkasten eingeleiteten Längskräfte.

Bevorzugt sind die oberen und unteren Längsträger mit mindestens zwei Kammern, besonders bevorzugt drei bis fünf Kammern ausgebildet, die durchgehend entlang der Längsachse der Längsträger verlaufen.

Besonders bevorzugt weisen die oberen und unteren Längsträger keine Trenn- oder Fügestellen senkrecht zur Wagenkastenlängsachse auf. Besonders bevorzugt sind die Längsträger als einteilige Bauteile über die gesamte Länge des Wagenkastens angeordnet.

Besonders bevorzugt sind die Kammern der Mehrkammerhohlprofile von einer Außenwand umgeben. Besonders bevorzugt besteht die Außenwand aus einer oder mehreren Lagen mindestens eines FKV-Werkstoffs. Besonders bevorzugt werden die Kammern der Mehrkammerhohlprofile durch Stege voneinander getrennt, wobei die Längsachsen der Stege parallel zu der Längsachse der Längsträger ausgerichtet sind. Die Stege wirken somit als Zwischenwände im Inneren der Mehrkammerhohlprofile, wobei die Kammern sich vorzugsweise unterbrechungsfrei durch die gesamte Länge des Längsträger erstrecken.

Bevorzugt sind die Faserverstärkungen sowohl der Außenwand des Mehrkammerhohlprofils als auch der Stege zwischen den einzelnen Kammern der Mehrkammerhohlprofile ein- oder mehrlagig ausgebildet.

Besonders bevorzugt sind die Fasern innerhalb der einzelnen Lagen, die die Außenwand des Mehrkammerhohlprofils und die Stege zwischen den einzelnen Kammern der Mehrkammerhohlprofile bilden, unidirektional oder mehrachsig ausgerichtet, besonders bevorzugt mit unidirektionaler oder quadraxialer Ausrichtung.

Bevorzugt ist sowohl der Lagenaufbau der Außenwand des Mehrkammerhohlprofils als auch der Stege zwischen den einzelnen Kammern der Mehrkammerhohlprofile alternierend aus Einzellagen mit unidirektionaler und mehrachsiger, besonders bevorzugt quadraxialer, Faserausrichtung hergestellt, wobei die Einzellagen mit mehrachsiger Faserausrichtung besonders bevorzugt Gewebe umfassen.

Besonders bevorzugt werden die Längsträger mittels des Pultrusionsverfahrens hergestellt.

Die Anbindung des Querträgers zur Drehzapfenaufnahme erfolgt unterhalb des Wagenkastens an den unteren Längsträgern.

Bevorzugt sind die unteren Längsträger direkt mit den einzelnen Bodensegmenten der Baugruppe Boden verbunden. Die unteren Längsträger stellen die Verbindung zwischen den Boden- und Seitenwandsegmenten her.

Bevorzugt sind die unteren Längsträger als Mehrkammerhohlprofile mit optional über die Länge variierendem Querschnitt mit mindestens zwei Kammern, besonders bevorzugt mit drei Kammern, ausgebildet, die durchgehend entlang der Längsachse der Längsträger verlaufen. Besonders bevorzugt weist das Mehrkammerhohlprofil eines unteren Längsträgers zumindest in einem Bereich des Wagenkastens zwei Kammern auf. Besonders bevorzugt ist mindestens eine der Kammern des Mehrkammerhohlprofils der unteren Längsträger im Querschnitt als rechtwinkliges Polygon ausgebildet. Besonders bevorzugt weisen die einzelnen Kammern der unteren Längsträger vieleckige Querschnitte, besonders bevorzugt dreieckige und/ oder viereckige Querschnitte auf. Besonders bevorzugt weist der Querschnitt der Kammer abgerundete Ecken auf. Die Abrundung der Ecken entspricht dabei vorzugsweise dem zulässigen Biegeradius der Verstärkungsfasern. Alternativ weist der Querschnitt einer Kammer Ecken auf. Die Aneinanderreihung der einzelnen Kammern ergibt das Profil der unteren Längsträger.

Die Aufgabenstellung, die Kraftübertragung von einem Querträger in Faserverbundstrukturen, insbesondere in die Längsträger eines Wagenteils, die aus Faserverbundmaterial bestehen, zu ermöglichen, wird erfindungsgemäß gelöst, indem jeder der beiden unteren Längsträger in dem Teilbereich der unteren Längsträger eine geringere Anzahl von Kammern aufweist, in dem die Querträger an die unteren Längsträger angebunden werden. Die durch Reduzierung der Kammeranzahl erzeugten Aussparungen dienen dem Fügen mit dem Querträger. Der Querträger dient zur Auflage des Wagenkastens auf dem Drehgestell.

Bevorzugt wird die Reduzierung der Kammeranzahl der unteren Längsträger in einem der Pultrusion nachgelagerten Prozessschritt durch spanende Fertigungsverfahren, z. B. Fräsen, erzielt.

Bevorzugt wird die Kammer des unteren Längsträgers, die der beabsichtigten Montageposition des Querträgers zugewandt ist, aufgefräst oder mit anderen geeigneten Verfahren geöffnet. Dabei erfolgt bevorzugt ein Abtrag der Außenwand dieser Kammer derart, dass ein kantenloser Übergang in den Steg zur nächsten Kammer des unteren Längsträgers entsteht. Dieser Steg zur nächsten Kammer des Mehrkammerhohlprofiles des unteren Längsträgers wird zur Befestigung von Lastverteilungselementen genutzt. Durch die Lasteinleitung in den genannten Steg wird vorteilhaft erreicht, dass die Lastübertragung in Längsrichtung des jeweiligen unteren Längsträgers über ein ansonsten ungestörtes Faserverstärkungssystem (außerhalb des Abschnittes mit reduzierter Kammerzahl) im Inneren des unteren Längsträger realisiert wird. Vorteilhaft erfolgt die Hauptlastübertragung von Zug- und Druckkräften des Fahrbetriebes somit im Inneren des unteren Längsträgers. Dies vermeidet vorteilhaft, dass die in Längsrichtung des unteren Längsträgers wirkenden Zug- und Druckkräfte eine Verformung des unteren Längsträgers unterstützen oder hervorrufen könnten. Weitere Installationen, die sich unterhalb des Bodens des Wagenteils befinden, sind an der Außenwand des unteren Längsträgers im Bereich mit nicht reduzierter Kammerzahl, befestigt. Somit greifen die jeweiligen Lastverteilungselemente als einzige Störungen in die Stegstruktur, an der sie befestigt sind, ein. Darüber hinaus liegt die Befestigung der Lastverteilungselemente näher an der neutralen Faser des jeweiligen unteren Längsträgers. Die reduziert die Übertragung von wechselnden Biegemomenten, die zu einer nachteiligen Beanspruchung im Befestigungsbereich der jeweiligen Lastverteilungselemente führen könnten.

Der Wagenkasten weist bevorzugt zwei Querträger auf, über die er auf Drehgestellen aufliegt. Die Querträger nehmen an ihren (in Wagenlängsrichtung gesehen) seitlichen Enden die Last des Wagenkastens auf bzw. übertragen die Zug- und Druckkräfte des Fahrbetriebes mittels der Lastverteilungselemente auf die unteren Längsträger. An jedem seitlichen Ende eines Querträgers sind zu diesem Zweck ein oder mehrere Lastverteilungselemente angeordnet. Jeder Querträger weist einen querenden Teil, der senkrecht zu den unteren Längsträgern und diese verbindend verläuft, sowie einen Längsteil auf, der von dem querenden Teil in Richtung des nächstgelegenen Endes des Wagenteils zur Endtraverse verläuft. Die Durchführung durch bzw. die Anbindung an die Endtraverse erfolgt mit Verbindungselementen (bevorzugt metallisch), die als Schnittstellenelemente die Übertragung der Zug- und Druckkräfte des Fahrbetriebs und des Crash-Falles in den Querträger und von dort in die unteren Längsträger ermöglichen.

Die Lastverteilungselemente sind bevorzugt als Winkelprofile ausgeführt, die im Bereich der reduzierten Kammeranzahl des unteren Längsträgers an diesem mit metallischen Verbindungselementen, wie Nieten, Schrauben oder Bolzen befestigt sind. Die metallischen Lasteinleitungselemente stellen darüber hinaus Öffnungen bereit, über die das entsprechende seitliche Ende des Querträgers im Bereich der Lasteinleitungselemente an dem jeweiligen unteren Längsträger befestigt wird. Die Lastverteilungselemente bestehen bevorzugt aus Metall, besonders bevorzugt aus Stahl oder Titan.

Es hat sich als nachteilig erwiesen, die Kraftübertragung von den Querträgern auf die unteren Längsträger in deren Längsrichtung nur durch die metallischen Verbindungselemente, mit denen die Querträger an den unteren Längsträgern befestigt sind, vorzunehmen. Die dabei erfolgende Wechselbeanspruchung kann im Langzeitbetrieb zu Schäden führen.

Erfindungsgemäß weist dazu das jeweilige seitliche Ende des querenden Teils des Querträgers mindestens eine Zahnung auf, die in die formideal entsprechende Zahnung an einem Lastverteilungselement eingreift. Optional können mehrere Zahnungen eines seitlichen Endes eines Querträgers mit den Zahnungen eines Lastverteilungselementes oder mehrerer unterschiedlicher Lastverteilungselemente an demselben unteren Längsträger korrespondieren. Die Flanken der Zähne der Zahnungen sind dabei senkrecht zu den Längsachsen der unteren Längsträger ausgerichtet.

Da eine Neigung der Zahnungen zu Kraftkomponenten führen würde, die die Verbindung zwischen Lastverteilungselement und Querträger beanspruchen, weisen die Zahnungen bevorzugt senkrechte Flanken und horizontale Deckflächen auf. Die Zahnungen von Querträger und Lastverteilungselement sind somit vorzugsweise in der Art zweier aufeinander aufliegender Zahnstangen mit quaderförmigen Zähnen ausgeführt. Die gewährleistet vorteilhaft die Trennung der horizontalen (Zug- und Druckkräfte des Fahrbetriebes) und vertikalen (Auflagekraft des Wagenteils auf dem Querträger) Kräfte.

Der Längsteil des Querträgers erstreckt sich bis zu der jeweiligen Endtraverse, in der er widergelagert ist. Bevorzugt ist er durch die Endtraverse hindurchgeführt bzw. endet in dieser. Das Endstück in Wagenlängsrichtung des Längsteils des Querträgers stellt eine Schnittstelle zur Befestigung einer Kupplung zur Anbindung des folgenden Wagens oder aber eine Schnittstelle zur Befestigung des Crash-Durchleitungselementes des Kopfteils bereit. Das Endstück in Wagenlängsrichtung ist dafür bevorzugt gegabelt ausgeführt und weist an den gegabelten Enden eine gemeinsame Montageplatte als Schnittstelle auf. Über das Crash-Durchleitungselement werden die Kräfte der Mittelpuffer-Kupplung des Kopfteils auf das Endstück in Wagenlängsrichtung übertragen.

Somit weist ein Querträger schematisch eine T-Form auf. Die Enden des horizontalen Balkens der T-Form werden durch die seitlichen Enden des querenden Teils des Querträgers, die in den jeweiligen unteren Längsträgern befestigt sind und diese unterhalb des Wagenbodens verbinden, gebildet. Das untere Ende des vertikalen Balkens der T-Form wird durch die Schnittstelle zur Befestigung der Kupplung bzw. des Crash-Durchleitungselementes am Ende des Längsteils des Querträgers ausgebildet. Dieser Abschnitt des Querträgers leitet die Kräfte von der Kupplung in die beiden Längsträger. In einer weiteren bevorzugten Ausführungsform ist die T-Form in eine Y-Form abgewandelt, wobei den Abschnitten dieser Form die analogen Funktionen wie bei der T-Form zugeordnet sind.

Bevorzugt sind die seitlichen Enden des querenden Teils des Querträgers in dem Bereich, in dem sie in die Lastverteilungselemente eingreifen, in Längsrichtung der unteren Längsträger verbreitert, um die Kräfte über eine größere Fläche übertragen zu können.

Der Querträger, der die Zug- und Druckkräfte auf nachfolgende Wagen überträgt, kann optional eine Verstärkung des Teils aufweisen, der die Schnittstelle zur Befestigung der Kupplung ausbildet. Dazu ist bevorzugt eine Versteifung in Form eines Profils an dem Teil ausgebildet, der von der Kupplung zu dem Teil des Querträgers reicht, der die beiden Lastverteilungselemente verbindet.

Der Querträger besteht bevorzugt zur Gänze aus Metall, vorzugsweise aus Stahl oder Titan.

Der Querträger weist darüber hinaus Öffnungen zur Anbindung der Luftfedern und des Zapfens zur Auflage im Drehgestell auf. Auch die weiteren aus dem Stand der Technik bekannten Installations- und Montagevorkehrungen sind möglich. Die Ausführung von Materialdicke, der Versteifungen und ähnlicher Parameter, die der Gewährleistung von Steifigkeit, Kraftübertragungsvermögen und zur Erfüllung weiterer technischer Parameter des Zugbetriebs dienen, werden im Zuge des Entwurfs durch den Fachmann mit bekannten Methoden des computergestützten Entwurfs und der computergestützten Auslegung bzw. Simulation bestimmt.

Nachfolgend werden Ausführungsbeispiele der Erfindung anhand einiger Figuren erläutert. Dabei zeigen
- **Fig. 1**: perspektivische Ansicht der Unterseite des Wagenkastens
- **Fig. 2**: perspektivische Ansicht des Untergestells des Wagenkastens
- **Fig. 3**: Draufsicht auf das Untergestell des Wagenkastens
- **Fig. 4**: Detailansicht eines Bodenträgers im Querschnitt
- **Fig. 5**: perspektivische Ansicht eines Bodenträgers und Querschnitte an verschiedenen Stellen des Bodenträgers
- **Fig. 6**: perspektivische Ansicht der Positionierung der Lastverteilungselemente an einem unteren Längsträger
- **Fig. 7**: perspektivische Ansicht eines Querträgers in der Ausführung für das Wagenende mit Kopfteil
- **Fig. 8**: Schnitt durch die Anordnung der Enden des Querträgers an den Lastverteilungselementen und am unteren Längsträger

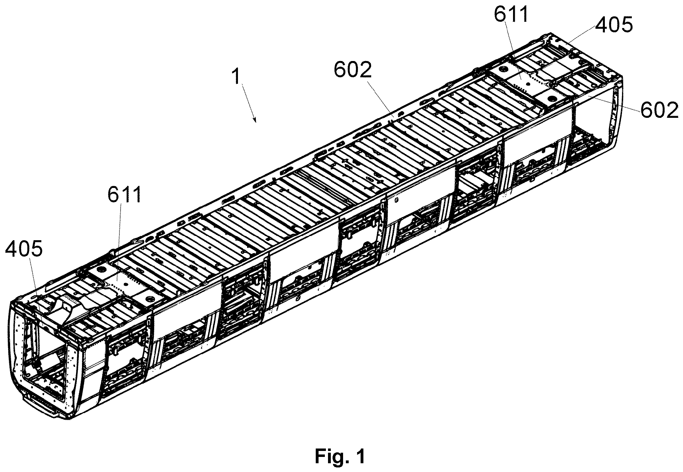

**Fig. 1** zeigt die Unterseite des Wagenkastens 1 in perspektivischer Ansicht. Die Positionierung der unteren Längsträger 602, der Querträger 611, die die Längsträger 602 an zwei Stellen in der Nähe der Wagenenden verbinden, und der Endtraversen 405, die die Längsträger 602 an den Wagenenden abschließen, sind erkennbar.

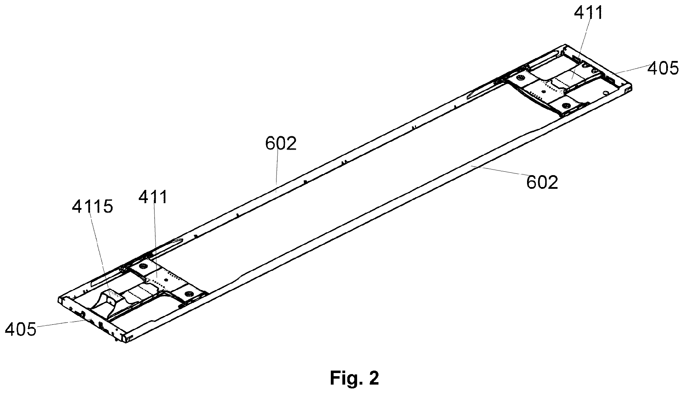

**Fig. 2** zeigt Teile des Untergestells, das hier aus den Längsträgern 602, den Querträgern 411 und den Endtraversen 405 besteht. Einer der beiden Querträger 411 weist eine zusätzliche Versteifung 4115 auf. Diese Versteifungen sind bevorzugt bei Querträgern 411 vorgesehen, die Kupplungskräfte an nachfolgende Wagen weiterleiten.

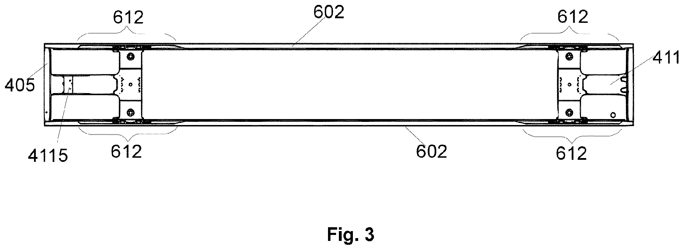

**Fig. 3** zeigt das Untergestell nach Figur 2 in der Ansicht von unten, d. h. von der Seite, von der die Querträger 411 auf den unteren Längsträgern 602 montiert werden. In den Abschnitten 612 ist die Kammerzahl der unteren Längsträger 602 reduziert. In diesen Abschnitten 612 werden die Lastverteilungselemente befestigt.

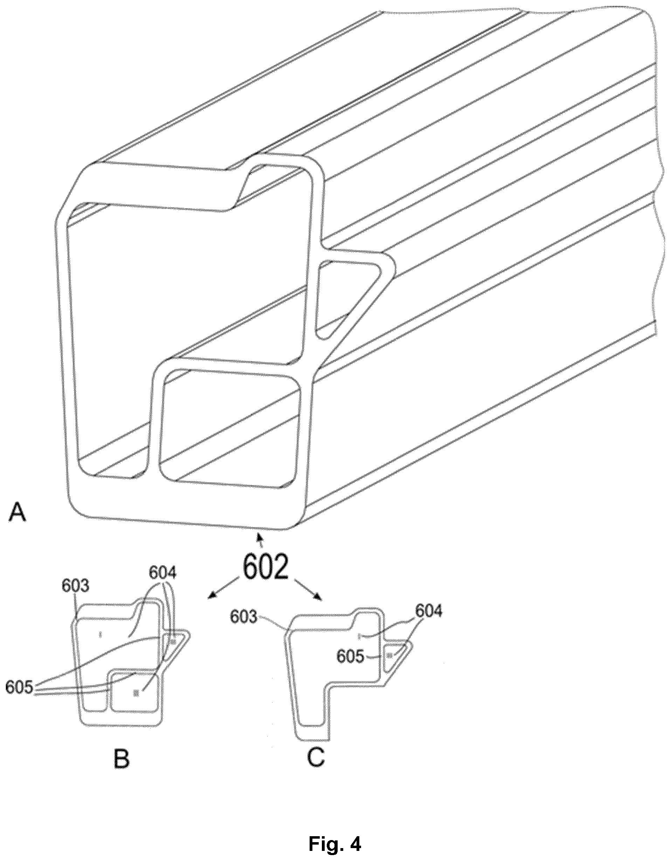

**Fig. 4****, Abb. A bis C** zeigen den Querschnitt eines unteren Längsträgers 602. Die unteren Längsträger 602 werden in einem kontinuierlichen hybriden Pultrusionsverfahren (z. B. Pullwinding- oder Pullbraiding-Verfahren) mit drei Kernen und einem über die Länge von 21 m konstanten Querschnitt hergestellt. Der untere Längsträger 602 weist drei durch römische Ziffern I bis III gekennzeichnete Hohlkammern 604 mit vieleckigen Querschnitten auf, wobei eine Kammer III mit dreieckigem und zwei Kammern (I, II) mit viereckigem Querschnitt und jeweils gerundeten Ecken 603 ausgeführt sind. Die Außenwand 606 und die Stege 605 zwischen den einzelnen Kammern 604 sind aus jeweils 4 Lagen quadraxialem Gelege mit einer Einzeldicke von 1,8 mm und einer Faserausrichtung von 0°, -45°, +45° und 90° ausgebildet. Lasttragende Bereiche des unteren Längsträgers 602, der Obergurt 607 und der Untergurt 608 weisen einen differenzierten Lagenaufbau auf.

In einem Ausführungsbeispiel weist ein unterer Längsträger 602 Dimensionen von 21030 mm x 215 mm x 232 mm (Länge x Breite x Höhe) und eine Masse von ca. 370 kg auf.

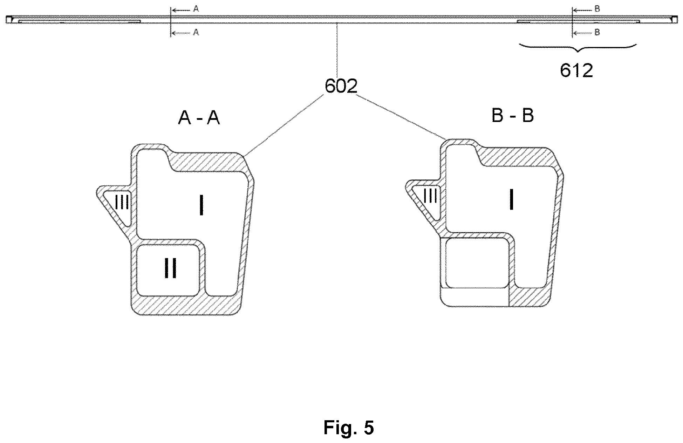

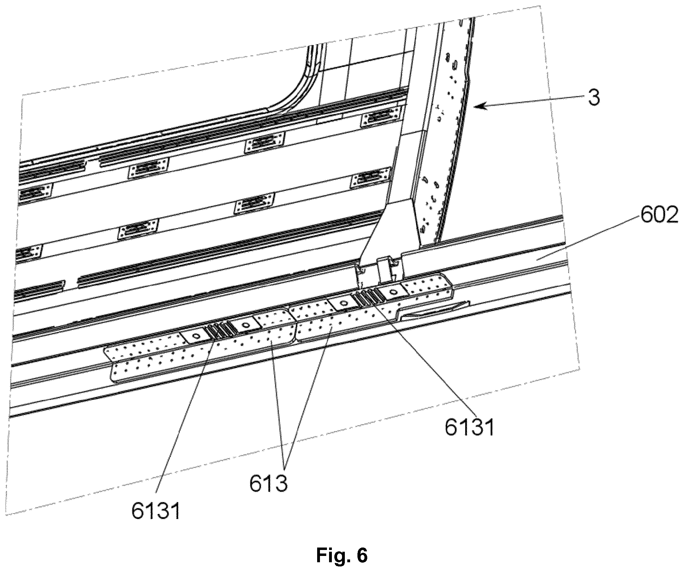

**Fig. 5** verdeutlicht die Lage des Abschnittes 612 am unteren Längsträger 602 (obere Abbildung), in dem die Kammerzahl des unteren Längsträgers 602 reduziert wurde. In diesem Abschnitt (Schnitt B-B) wird das Lastverteilungselement an dem nunmehr freiliegenden Steg der bisherigen Kammer II fixiert. Da das Lastverteilungselement einen rechtwinkligen Querschnitt aufweist (siehe Fig. 6), werden beide Stege zur Fixierung genutzt. In Schnitt A-A ist der Querschnitt des unteren Längsträgers 602 außerhalb des Befestigungsabschnittes der Lastverteilungselemente beispielhaft dargestellt.

**Fig. 6** zeigt in einer perspektivischen Darstellung die Anordnung des Lastverteilungselementes 613 am unteren Längsträger 602. Angedeutet ist die Seitenwand 3 des Wagenteils. Die Darstellung zeigt zwei Lasteinleitungselemente 613, die jeweils einen gezahnten Abschnitt 6131 aufweisen.

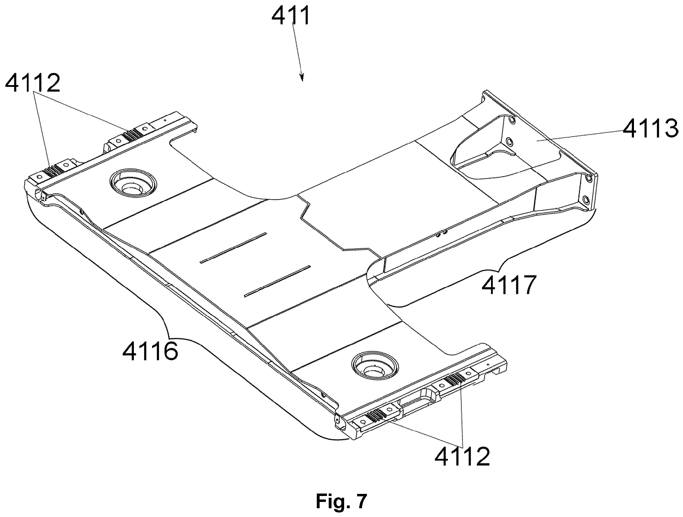

**Fig. 7** zeigt den Querträger 411 in perspektivischer Ansicht. Der Querträger 411 weist einen querenden Teil 4116 und einen Längsteil 4117 auf. Der Querträger 411 greift an den Enden des querenden Teils 4116 mittels der Zahnungen 4112 in die korrespondierenden Zahnungen der Lastverteilungselemente an den unteren Längsträgern (nicht dargestellt) ein. Über die Schnittstelle 4113 wird die Verbindung zur Kupplung im Bereich der Endtraverse hergestellt.

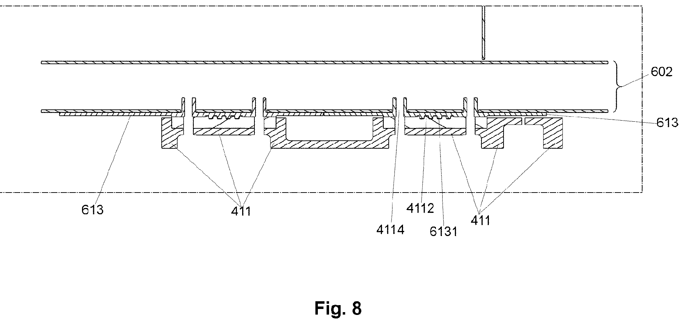

**Fig. 8** verdeutlicht die Anordnung von Lastverteilungselement 613 und Querträger 411 an dem unteren Längsträger 602. Dargestellt ist ein Schnitt parallel zur Längsachse des unteren Längsträgers 602 im Bereich der Befestigungsöffnungen 4112. Die verzahnten Bereiche 6131 des Lastverteilungselementes 613 und die verzahnten Bereiche 4112 des Querträgers 411 greifen formideal ineinander. Die Befestigung des Querträgers 411 erfolgt durch die Öffnungen 4114, durch die entsprechende Haltebolzen geführt werden können.

### Bezugszeichen

- 1: Wagenkasten
- 3: Seitenwand
- 405: Endtraverse
- 410: Durchführung
- 411: Querträger
- 4112: gezahnter Bereich des Querträgers
- 4113: Schnittstelle zur Anbindung der Wagenkupplung
- 4114: Öffnung zur Durchführung von Verbindungselementen
- 4115: Versteifung des Querträgers
- 4116: Querender Teil des Querträgers
- 4117: Längsteil des Querträgers

- 602: Unterer Längsträger
- 603: gerundete Ecke
- 604: Hohlkammer (vieleckiges Polygon)
- 605: Steg
- 606: Außenwand des Längsträgers
- 607: Obergurt
- 608: Untergurt
- 609: Füllbereich
- 610: Füllzwickel
- 611: Zwischenlagen
- 612: Abschnitt des unteren Längsträgers mit reduzierter Kammerzahl
- 613: Lastverteilungselement
- 6131: gezahnter Bereich des Lastverteilungselementes

## Patentansprüche

1. Anordnung zur Anbindung eines Querträgers (411) zur Drehzapfenaufnahme an zwei unteren Längsträgern (602) für einen Wagenkasten (1) eines Schienenfahrzeugs, die Anordnung umfasst den Querträger (411) und beide Längsträger (602), wobei
der Querträger (411) einen querenden Teil (4116), der die beiden Längsträger (602) im Bereich der Anbindung miteinander verbindet, und einen Längsteil (4117), der geeignet ist, sich
zur nächstliegenden Wagenfront zu erstrecken, aufweist, und die unteren Längsträger (602) als
Mehrkammerhohlprofile aus Faserverbundmaterial bestehen und geeignet sind, sich über die gesamte Länge des Wagenkastens (1) zu erstrecken, **dadurch**
**gekennzeichnet, dass**
- das Mehrkammerhohlprofil in der Zahl seiner Kammern (604) im Bereich der Anbindung so reduziert ist, dass das Wandungsmaterial mindestens einer Kammer (604) derart entfernt wurde, dass die Stege (605) zu den benachbarten Kammern (604) frei liegen,
- ein Lastverteilungselement (613) oder mehrere Lastverteilungselemente (613) an einem oder mehreren der freigelegten Stege (605) befestigt sind,
- die Lastverteilungselemente (613) gezahnte Abschnitte (6131) aufweisen, die in formideale Gegenstücke (4112) an den Enden des querenden Teils (4116) des Querträgers (411) eingreifen,
- der Querträger (411) mittels metallischer Verbindungselemente, die durch die Lastverteilungselemente (613) in eine oder mehrere Kammern (604) des jeweiligen unteren Längsträgers (602) ragen, befestigt ist.

2. Anordnung nach Anspruch 1, **dadurch gekennzeichnet, dass** die unteren Längsträger (602) an den unteren seitlichen Kanten des Wagenkastens (1) angeordnet werden kann.

3. Anordnung nach einem der vorhergehenden Ansprüche, **dadurch gekennzeichnet, dass** die Lastverteilungselemente (613) einen abgewinkelten Querschnitt aufweisen und so an mindestens zwei Stegen (605) befestigt sind, oder
dass die Lastverteilungselemente (613) einen abgewinkelten Querschnitt aufweisen und so an mindestens einem Steg (605) und der Außenwand (606) des unteren Längsträgers (602) befestigt sind.

4. Anordnung nach einem der vorhergehenden Ansprüche, **dadurch gekennzeichnet, dass** die Lastverteilungselemente (613) mit metallischen Verbindungsstücken an dem unteren Längsträger (602) befestigt sind.

5. Anordnung nach einem der vorhergehenden Ansprüche, **dadurch gekennzeichnet, dass** das Ende des Längsteils (4117) des Querträgers (411) in einer Endtraverse (405) am Ende des Wagenkastens (1) widergelagert ist, wobei die Endtraverse (405) die Enden der beiden unteren Längsträger (602) verbindet.

6. Anordnung nach einem der vorhergehenden Ansprüche, **dadurch gekennzeichnet, dass** eine erste Art von Querträgern (411), die zur Übertragung der Kupplungslast an nachfolgende Wagen ausgestaltet ist, am Ende des Längsteils (4117), das sich zur nächstliegenden Wagenfront erstreckt, eine Schnittstelle (4113) zur Aufnahme einer Kupplung aufweist.

7. Anordnung nach Anspruch 6, **dadurch gekennzeichnet, dass** ein Querträger (411) der ersten Art ein zusätzliches Verstärkungsprofil (4115) aufweist.

8. Anordnung nach einem der Ansprüche 1 bis 5, **dadurch gekennzeichnet, dass** eine zweite Art von Querträgern (411), die zum Kopfteil des Wagens gerichtet ist, am Ende des Längsteils, eine Schnittstelle zur Anbindung eines Crash-Durchleitungselementes aufweist.

## Claims

1. An assembly for connecting a cross beam (411) for receiving pivot pins to two lower longitudinal beams (602) for a coach body (1) of a rail vehicle, the assembly comprising the cross beam (411) and both longitudinal beams (602), wherein the cross beam (411) has a crossing section (4116) which connects the two longitudinal beams (602) to each other in the area of the connection, and a longitudinal section (4117) which is suitable for extending to the front of the next coach, and the lower longitudinal beams (602) consisting, as multi-chamber hollow profiles, of fibre composite material and being suitable for extending over the entire length of the coach body (1), **characterized in that**
the number of chambers in the multi-chamber hollow profile (604) is reduced in the area of the connection such that the wall material of at least one chamber (604) has been removed in such a way that the webs (605) to the adjacent chambers (604) are exposed;
one load distribution element (613) or several load distribution elements (613) are fixed to one or more of the exposed webs (605);
the load distribution elements (613) have toothed sections (6131) which engage in ideally shaped counter pieces (4112) at the ends of the crossing section (4116) of the cross beam (411);
the cross beam (411) is fixed by means of metallic connecting elements which protrude through the load distribution elements (613) into one or more chambers (604) of the respective lower longitudinal beam (602).

2. The assembly according to claim 1, **characterized in that** the lower longitudinal beams (602) can be arranged on the lower lateral edges of the coach body (1).

3. The assembly according to any of the foregoing claims, **characterized in that** the load distribution elements (613) have an angled cross section and are thus fixed to at least two webs (605); or
**in that** the load distribution elements (613) have an angled cross section and are thus fixed to at least one web (605) and the outer wall (606) of the lower longitudinal beam (602).

4. The assembly according to any of the foregoing claims, **characterized in that** the load distribution elements (613) are fixed to the lower longitudinal beam (602) with metallic connecting pieces.

5. The assembly according to any of the foregoing claims, **characterized in that** the end of the longitudinal section (4117) of the cross beam (411) is supported in an end cross-member (405) at the end of the coach body (1), wherein the end cross-member (405) connects the ends of the two lower longitudinal beams (602).

6. The assembly according to any of the foregoing claims, **characterized in that** a first type of cross beam (411) which is designed for transmitting the coupling loading to the following coach has an interface (4113) for accommodating a coupling at the end of the longitudinal section (4117) which extends to the front of the next coach.

7. The assembly according to claim 6, **characterized in that** a cross beam (411) of the first type has an additional reinforcing profile (4115).

8. The assembly according to any of the claims 1 to 5, **characterized in that** a second type of cross beam (411), which is directed towards the head section of the coach, has an interface for the connection of a crash pass-through conduction element at the end of the longitudinal section.

## Revendications

1. Arrangement pour le raccordement d'une barre transversale (411) pour la réception d'un pivot à deux barres longitudinales inférieures (602) pour une caisse de wagon (1) d'un véhicule sur rails, l'arrangement comprenant la barre transversale (411) et les deux barres longitudinales (602), la barre transversale (411) présentant une partie en travers (4116) qui relie les deux barres longitudinales (602) l'une à l'autre dans la zone de raccordement, et une partie longitudinale (4117) qui est apte à s'étendre vers l'avant du wagon le plus proche, et les barres longitudinales inférieures (602), en tant que profiles creux à chambres multiples, étant en un matériau composite en fibres et étant aptes à s'étendre sur toute la longueur de la caisse de wagon (1), **caractérisé en ce que**
- le nombre des chambres (604) du profil creux à chambres multiples est réduit dans la zone de raccordement de telle sorte que le matériau de paroi d'au moins une chambre (604) est enlevé de sorte que les barrettes (605) vers les chambres adjacentes (604) sont dégagées,
- un élément de répartition de charge (613) ou plusieurs éléments de répartition de charge (613) est/sont fixés à une ou plusieurs des barrettes dégagées (605),
- les éléments de répartition de charge (613) présentent des tronçons dentés (6131) qui s'engagent dans des pièces antagonistes (4112) à forme idéale aux extrémités de la partie en travers (4116) de la barre transversale (411),
- la barre transversale (411) est fixée au moyen d'éléments de connexion métalliques qui font saillie à travers les éléments de répartition de charge (613) dans une ou dans plusieurs chambres (604) de la barre longitudinale inférieure (602) respective.

2. Arrangement selon la revendication 1, **caractérisé en ce que** les barres longitudinales inférieures (602) peuvent être agencées au niveau des arêtes latérales inférieures de la caisse de wagon (1).

3. Arrangement selon l'une des revendications précédentes, **caractérisé en ce que** les éléments de répartition de charge (613) présentent une section transversale coudée et sont ainsi fixés à au moins deux barrettes (605), ou
**en ce que** les éléments de répartition de charge (613) présentent une section transversale coudée et sont ainsi fixés à au moins une barrette (605) et à la paroi extérieure (606) de la barre longitudinale inférieure (602).

4. Arrangement selon l'une des revendications précédentes, **caractérisé en ce que** les éléments de répartition de charge (613) sont fixés à la barre longitudinale inférieure (602) par des pièces de connexion métalliques.

5. Arrangement selon l'une des revendications précédentes, **caractérisé en ce que** l'extrémité de la partie longitudinale (4117) de la barre transversale (411) est en butée dans une traverse d'extrémité (405) à l'extrémité de la caisse de wagon (1), la traverse d'extrémité (405) reliant les extrémités des deux barres longitudinales inférieures (602).

6. Arrangement selon l'une des revendications précédentes, **caractérisé en ce qu'**un premier type de barre transversale (411) réalisé pour le transfert de la charge d'accouplement à des wagons suivants, présente, à l'extrémité de la partie longitudinale (4117) qui s'étend vers l'avant du wagon le plus proche, une interface (4113) pour la réception d'un d'accouplement.

7. Arrangement selon la revendication 6, **caractérisé en ce qu'**une barre transversale (411) du premier type présente un profil de renforcement supplémentaire (4115).

8. Arrangement selon l'une des revendications 1 à 5, **caractérisé en ce qu'**un deuxième type de barre transversale (411) qui est orienté vers la partie de tête du wagon, présente, à l'extrémité de la partie longitudinale, une interface pour le raccordement d'un élément de passage de collision.
